# EUROPÄISCHE PATENTANMELDUNG

(11) **EP 2 230 749 A2**
(43) Veröffentlichungstag der Anmeldung: **22.09.2010**
(21) Anmeldenummer: 10450041.8
(22) Anmeldetag: 16.03.2010
(51) Int. Cl.: H02K 3/52

(54) **Stator für eine Elektromaschine, insbesondere für einen Elektromotor**

(30) Priorität: 16.03.2009 AT 4172009
(71) Anmelder: Egston System Electronics Eggenburg GmbH, 3730 Eggenburg (AT)
(72) Erfinder: Prand-Stritzko, Ernst, Ing., 2091 Langau (AT)
(74) Vertreter: Gibler & Poth Patentanwälte OEG

(57) **Zusammenfassung**

Bei einem Stator (1) für eine Elektromaschine, insbesondere einen Elektromotor, wobei der Stator (1) wenigstens eine Statorzahngruppe (11) umfasst, welche Statorzahngruppe (11) einen ersten Statorzahn (21) und einen zum ersten Statorzahn (21) benachbarten zweiten Statorzahn (22) umfasst, wobei der erste Statorzahn (21) eine erste Wicklung (61) und einen ersten Polzahn (51) umfasst, wobei der zweite Statorzahn (22) einen zweiten Polzahn (52) umfasst, und wobei ein Zwischenraum (4) zwischen der ersten Wicklung (61) und dem zweiten Statorzahn (22) ausgebildet ist, wird zur Gewährleistung eines dauerhaft guten Wärmeübergangs zwischen dem Spulendraht der Wicklung und dem Polzahn, insbesondere über viele Zyklen der thermischen Wechselbeanspruchung hinweg, vorgeschlagen, dass im Zwischenraum (4) ein Anpresselement (3) zum Anpressen der ersten Wicklung (61) in Richtung des ersten Polzahns (51) angeordnet ist.

## Beschreibung

Die Erfindung betrifft einen Stator gemäß dem Oberbegriff des Patentanspruches 1.

Der Stator ist für eine Elektromaschine, insbesondere eine rotationsbewegte Elektromaschine, bevorzugt einen Generator oder einen Elektromotor, vorgesehen. Der Stator wird in unterschiedlichen Einsatzgebieten der Umwandlung von elektrischer Leistung in mechanische Leistung und umgekehrt verwendet. Insbesondere kann die Elektromaschine für Fahrzeuge, insbesondere Kraftfahrzeugen für Personen und Güter, Züge, Flugzeuge, Schiffe, Hebeeinrichtungen, insbesondere Aufzüge sowie für Generatoren zur Stromerzeugung bestimmt sein, wobei die Elektromaschine zur stationären und/oder zur mobilen Verwendung vorgesehen ist.

Der Stator ist üblicherweise rund, gegebenenfalls oval, ausgebildet und weist eine Statorzentralachse auf. Um diese Statorzentralachse rotiert eine weiters vom Generator bzw. Elektromotor umfasster Rotor, welcher - bei Außenläufern - den Stator in einer Ebene normal zur Statorzentralachse umschließt oder - bei Innenläufern - vom Stator in der Ebene normal zur Statorzentralachse umschlossen ist.

Der Stator umfasst wenigstens den ersten Polzahn, welcher eine erste Wicklung umfasst, und wenigstens den zweiten Polzahn, welcher unbewickelt sein kann oder eine zweite Wicklung umfassen kann. Der unbewickelte Polzahn bzw. der bewickelte Polzahn können dabei jeweils einen Statorzahn ausbilden. Der Stator ist dabei aus wenigstens zwei Statorzähnen zusammengesetzt, wobei die Statorzähne des Stators im Wesentlichen radial um die Statorzentralachse angeordnet sind. Der Statorzahn kann auch einen Isolierkörper zur elektrischen Isolation von Wicklung zum Polzahn umfassen, welcher zwischen der jeweiligen Wicklung und dem jeweiligen Polzahn angeordnet ist. Jede der Wicklungen ist aus wenigstens einem Spulendraht gewickelt, wobei die Wicklung manuell oder automatisiert - insbesondere automatisiert in einer Wickelmaschine - wickelbar ist.

Jeweils zwei der wenigstens zwei Statorzähne des Stators bilden dabei die Statorzahngruppe aus, wobei die beiden Statorzähne der Statorzahngruppe als erster Statorzahn und als zweiter Statorzahn bezeichnet werden.

Zwischen dem ersten Statorzahn und dem zweiten Statorzahn ist ein Zwischenraum ausgebildet. Der Zwischenraum kann dabei entweder - wenn beide Statorzähne jeweils eine Wicklung umfassen - zwischen der ersten Wicklung und der zweiten Wicklung ausgebildet sein oder - wenn lediglich der erste Statorzahn die Wicklung umfasst und der zweite Statorzahn also wicklungsfrei ausgebildet ist - zwischen der ersten Wicklung und dem zweiten Polzahn ausgebildet sein.

Bei der Verwendung des Stators in der Elektromaschine ist dieser einer thermischen Wechselbeanspruchung ausgesetzt. Die thermische Wechselbeanspruchung ist dabei die - insbesondere zyklische - Temperaturänderung des Stators aufgrund von externen Temperaturänderungen oder aufgrund von interner Erwärmung des Stators im Betrieb der Elektromaschine, wobei sich verschiedene Werkstoffe des Stators unterschiedlich ausdehnen.

Dabei treten mechanische Spannungen zwischen den verschiedenen Werkstoffen auf und in nachteiliger Weise kann sich die Wicklung vom Polzahn weg abheben bzw. lösen. Dieses Abheben bzw. Lösen kann dabei insbesondere bei der Erwärmung der Wicklung auftreten und kann dabei insbesondere dann auftreten, wenn die Wicklung deutlich wärmer als der Polzahn oder der Isolierkörper des Statorzahnes ist. Beim Abheben bewegt sich dabei die Wicklung in Richtung des an die Wicklung angrenzenden Zwischenraums. Nachteilig daran ist, dass - sofern sich die Wicklung vom Polzahn weg abhebt, wenngleich oftmals auch lediglich im zehntel-Millimter-Bereich - der Wärmeübergang von Spulendraht auf den Polzahn sprunghaft absinkt, wobei der Wärmekontaktwiderstand zwischen dem Spulendraht und dem Polzahn sprunghaft ansteigt.

Um das Ablösen der Wicklung weg vom Polzahn zu verhindern ist bekannt, die Wicklung mit dem Polzahn zu vergießen. Nachteilig daran ist, dass das Vergießen prozesstechnisch aufwendig ist und der Stator dabei nicht kostengünstig und schnell hergestellt werden kann. Nachteilig daran ist weiters, dass ein vergossener Stator gegenüber einem nicht vergossenen Stator deutlich mehr wiegt, wobei die gewichtsschonende Bauweise des Stators insbesondere für den Einsatz in Fahrzeugen von hoher Relevanz ist.

Aufgabe der Erfindung ist es daher einen Stator der eingangs genannten Art anzugeben, mit welchem die genannten Nachteile vermieden werden können, mit welchem der gute Wärmeübergang zwischen dem Spulendraht der Wicklung und dem Polzahn dauerhaft und für viele Zyklen der thermischen Wechselbeanspruchung gewährleistet werden kann und wobei der Stator kostengünstig, gewichtsschonend und schnell herstellbar ist.

Erfindungsgemäß wird dies durch die Merkmale des Patentanspruches 1 erreicht.

Dadurch ergibt sich der Vorteil, dass das Anpresselement ein Abheben der Wicklung weg vom Polzahn verhindert, womit ein geringer Wärmekontaktwiderstand zwischen dem Spulendraht und dem Polzahn auch nach vielen Zyklen der thermischen Wechselbeanspruchung gewährleistet werden kann. Vorteilhaft dabei ist, dass die Lebensdauer des Stators erhöht werden kann und dass der Stator über dessen Lebensdauer einen im Wesentlichen geringen und konstant geringen Wärmekontaktwiderstand zwischen dem Spulendraht und dem Polzahn aufweisen kann. Vorteilhaft dabei ist, dass der Stator eine - im Vergleich zum herkömmlichen Stator - hohe elektrische Leistung pro Volumen über dessen Lebensdauer umwandeln kann, womit die Elektromaschine kleiner, gewichtsschonender und/oder leistungsstärker ausgebildet werden kann. Dabei ergibt sich der weitere Vorteil, dass das zusätzliche Gewicht des Anpresselementes, insbesondere im Vergleich zur Vergussmasse herkömmlicher vergossener Wicklungen, gering ist. Auch ist üblicherweise die erfindungsgemäße Applizierung des Anpresselementes im Zwischenraum wesentlich kostengünstiger und schneller, als beispielsweise das Vergießen von Wicklung und Polzahn.

Die Erfindung betrifft weiters die Elektromaschine, insbesondere den Elektromotor, umfassend den erfindungsgemäßen Stator gemäß dem Patentanspruch 12. Insbesondere ergibt sich dabei der weitere Vorteil, dass auch die Elektromaschine, insbesondere der Elektromotor, kostengünstig und schnell herstellbar ist.

Die Erfindung betrifft weiters ein Verfahren zur Herstellung des erfindungsgemäßen Stators gemäß dem Patentanspruch 15.

Aufgabe des Verfahrens ist es ein kostengünstiges und schnell durchführbare Verfahren anzugeben, mit welchem der die vorstehenden Vorteile aufweisende Stator hergestellt werden kann.

Erfindungsgemäß wird dies durch die Merkmale des Patentanspruches 15 erreicht, womit der Stator einfach, schnell und kostengünstig herstellbar ist und die vorstehenden Vorteile gewährleisten kann.

Die Unteransprüche, welche ebenso wie die Patentansprüche 1 und 15 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 schematisch den erfindungsgemäßen Stator einer besonders bevorzugten ersten Ausführungsform schematisch in Frontsicht in Blickrichtung parallel zur Statorzentralachse,
Fig. 2 den zum erfindungsgemäßen Stator vergleichbaren herkömmlichen Stator schematisch in Frontsicht,
Fig. 3 Im Detail einer der Statorzahngruppen des Stators gemäß Fig. 1 schematisch in Frontsicht,
Fig. 4 im Detail gemäß Fig. 3 eine der Statorzahngruppen einer zweiten bevorzugten Ausführungsform des Stators schematisch in Frontsicht, und
Fig. 5 im Detail gemäß Fig. 3 eine der Statorzahngruppen einer dritten bevorzugten Ausführungsform des Stators schematisch in Frontsicht.

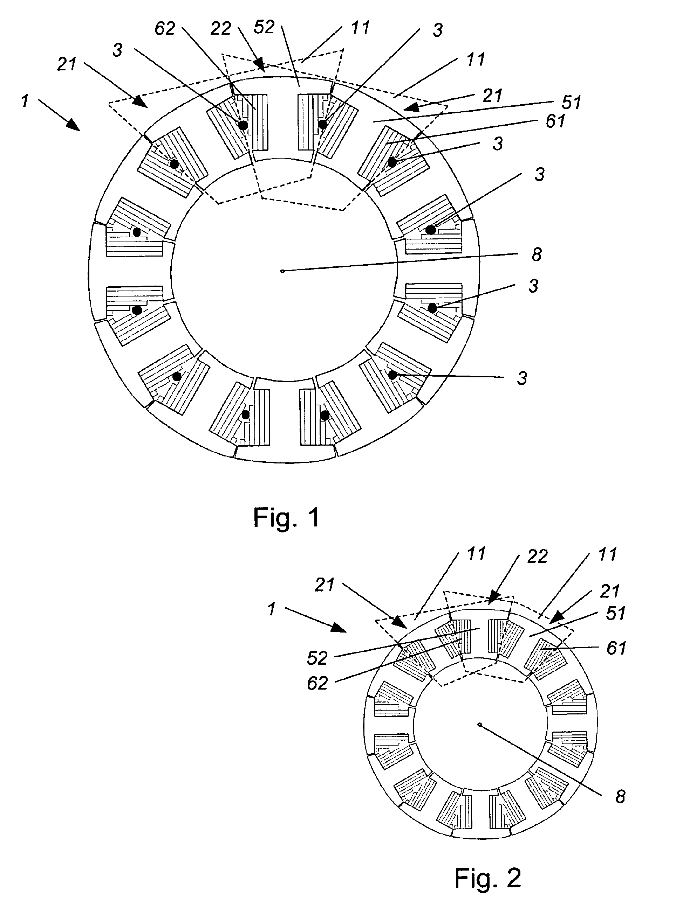

Die Fig. 1 und 3 bis 5 zeigen einen vorteilhaften Stator 1 oder Details des vorteilhaften Stators 1 für eine Elektromaschine, insbesondere einen Elektromotor, wobei der Stator 1 wenigstens eine Statorzahngruppe 11 umfasst, welche Statorzahngruppe 11 einen ersten Statorzahn 21 und einen zum ersten Statorzahn 21 benachbarten zweiten Statorzahn 22 umfasst, wobei der erste Statorzahn 21 eine erste Wicklung 61 und einen ersten Polzahn 51 umfasst, wobei der zweite Statorzahn 22 einen zweiten Polzahn 52 umfasst, und wobei ein Zwischenraum 4 zwischen der ersten Wicklung 61 und dem zweiten Polzahn 52 ausgebildet ist. Zur Gewährleistung eines dauerhaft guten Wärmeübergangs zwischen dem Spulendraht der Wicklung und dem jeweiligen Polzahn 51, 52, insbesondere über viele Zyklen der thermischen Wechselbeanspruchung der Wicklung 61, 62, wird vorgeschlagen, dass im Zwischenraum 4 ein Anpresselement 3 zum Anpressen der ersten Wicklung 61 in Richtung des ersten Polzahns 51 angeordnet ist. Vorteilhaft dabei ist, dass in einem vorbestimmbaren Temperaturbereich die erste Wicklung 61 vom Anpresselement 3 und in diesem Sinne mittels Fremdeinwirkung, also aktiv, in Richtung des ersten Polzahns 51 gedrückt wird.

Der Stator kann dabei insbesondere mit einem vorteilhaften Verfahren zur Herstellung des Stators 1 hergestellt werden, wobei auf dem ersten Polzahn 51 die erste Wicklung 61 gewickelt wird und derart die erste Wicklung 61 und der erste Polzahn 51 den ersten Statorzahn 21 ausbilden, wobei der zweite Polzahn 52 den zweiten Statorzahn 22 ausbildet, wobei der erste Statorzahn 21 und der zweite Statorzahn 22 benachbart zueinander angeordnet werden und derart die Statorzahngruppe 11 des Stators 1 ausbilden, wobei bei der benachbarten Anordnung der Zwischenraum 4 zwischen der ersten Wicklung 61 und dem zweiten Polzahn 52 ausgebildet wird, und wobei vorgeschlagen wird, dass anschließend an die benachbarte Anordnung des ersten Statorzahns 21 zum zweiten Statorzahn 22 das Anpresselement 3 in den Zwischenraum 4 zwischen der ersten Wicklung 61 und dem zweiten Polzahn 52 eingebracht wird. Vorteilhaft bei diesem Verfahren ist, dass der vorteilhafte Stator 1 besonders schnell, kostengünstig und gewichtsschonend herstellbar ist. Vorteilhaft dabei ist weiters, dass der herkömmliche Stator 1 im Wesentlichen nicht verändert werden muss, um nach der Ausbildung dem Statorzusammenbau die Anpresselemente 3 einzufügen. Vorteilhaft dabei ist, dass die herkömmlichen kostengünstigen Herstellmethoden und herkömmliche Maschinen zur Herstellung, insbesondere herkömmliche Wickelmaschinen, weiterverwendbar sind.

Bei der vorteilhaften ersten Ausführungsform, welche in Fig. 1 und 3 bis 5 dargestellt ist, ist weiters vorgesehen, dass der zweite Statorzahn 22 eine zweite Wicklung 62 umfasst, und dass das Anpresselement 3 im Zwischenraum 4 zum Anpressen und der zweiten Wicklung 62 in Richtung des zweiten Polzahns 52 angeordnet ist. Vorteilhaft dabei ist, dass auch die zweite Wicklung 62 vom Anpresselement 3 und in diesem Sinne mittels Fremdeinwirkung, also aktiv, in Richtung des zweiten Polzahns 52 gedrückt wird. In vorteilhafter Weise kann hiebei vorgesehen sein, dass anschließend an die benachbarte Anordnung des ersten Statorzahns 21 zum zweiten Statorzahn 22 das Anpresselement 3 in den Zwischenraum 4 zwischen der ersten Wicklung 61 und der zweiten Wicklung 62 eingebracht wird. Vorteilhaft dabei ist, dass der vorbestimmbare Temperaturbereich durch Materialauswahl und Auslegung der Geometrie des Anpresselementes dabei sehr genau vorbestimmt werden kann. Vorteilhaft dabei ist, dass durch das aktive Anpressen der ersten und zweiten Wicklungen 61, 62 in Richtung der jeweiligen Polzähne 51, 52 verhindert ist, dass sich die Wicklungen 61, 62 weg von den jeweiligen Polzähnen 51, 52 abheben. Dadurch ist gewährleistet, dass die jede der beiden Wicklungen 61, 62 der Statorzahngruppe 11 in dauerhaftem Kontakt mit dem jeweilig umwickelten der Polzähne 51, 52 oder einem jeweiligen Isolierkörper zwischen dem jeweiligen Polzahn 51, 52 und der jeweiligen Wicklung 61, 62 steht.

Die erste Ausführungsform des Stators kann dabei derart hergestellt werden, dass auf dem zweiten Polzahn 52 die zweite Wicklung 62 gewickelt wird und derart der Zwischenraum 4 zwischen der ersten Wicklung 61 und der zweiten Wicklung 62 ausbildet wird, und dass das Anpresselement 3 in diesen Zwischenraum 4 zwischen der ersten Wicklung 61 und der zweiten Wicklung 62 eingebracht wird.

Vorteilhafterweise kann vorgesehen sein, dass der erste Statorzahn 21 einen ersten Isolierkörper zur elektrischen Isolation der ersten Wicklung 61 gegenüber dem ersten Polzahn 51 umfasst. In vorteilhafter Weise kann dazu vorgesehen sein, dass der erste Isolierkörper zwischen der ersten Wicklung 61 und dem ersten Polzahn 51 angeordnet ist.

Vorteilhafterweise kann vorgesehen sein, dass - sofern der zweite Statorzahn 22 die zweite Wicklung 62 umfasst, also der zweite Polzahn 51 mit dem Spulendraht umwickelt ist - der zweite Statorzahn 22 einen weiteren Isolierkörper zur elektrischen Isolation der zweiten Wicklung 62 gegenüber dem ersten Polzahn 52 umfasst. In vorteilhafter Weiterbildung kann dazu vorgesehen sein, dass der Isolierkörper zwischen der zweiten Wicklung 62 und dem zweiten Polzahn 52 angeordnet ist.

Der jeweilige Isolierkörper kann bei einer Weiterbildung als Spulenträger, insbesondere Thermoplast- oder Duroplastspulenträger, ausgebildet sein, welcher Spulenträger geeignet ist, die Wicklung selbsttragend zu tragen. Der Spulenträger ist dabei vorfabriziert und weist eine ausreichende 3-dimenisonale Eigensteifigkeit auf. Der Isolierkörper kann bei einer anderen Weiterbildung als dünnschichtiges Isoliermedium, insbesondere als Isolierfolie oder als Isolierpapier, ausgebildet sein, welches dünnschichtige Isoliermedium zum Auflegen auf den Polzahn vorgesehen ist. Insbesondere kann der Isolierkörper mehrstückig ausgebildet sein, wobei die mehreren Stücke, aus welchen der Isolierkörper zusammengesetzt ist, insbesondere in eine Wickelmaschine einlegbar sind und am ersten Polzahn 51 bzw. am zweiten Polzahn 52 anordenbar sind, und wobei die mehreren Stücke entweder selbsttätig zusammenhalten oder mittels dem anschließenden Wickeln der Wicklung zusammen gehalten werden. Sofern zwischen dem ersten Polzahn 51 und der ersten Wicklung 61 ein erster Isolierkörper angeordnet ist, ist zusätzlich vorteilhaft, dass das Anpresselement 3 bewirkt, dass sowohl der jeweilige Spulendraht an den ersten Isolierkörper angepresst wird als auch der erste Isolierkörper an den ersten Polzahn 51 angepresst wird. Vorteilhaft dabei ist, dass auch ein Abheben des ersten Isolierkörpers weg vom ersten Polzahn 51 verhindert ist. Dies gilt gleichermaßen auch, sofern zwischen dem zweiten Polzahn 52 und der zweiten Wicklung 62 ein weiterer Isolierkörper angeordnet ist.

Der Spulendraht kann rund, also als Runddraht, oval, also als Ovaldraht, quadratisch, also als quadratischer Draht, und/oder rechteckig, also als Flachdraht, ausgebildet sein.

In Fig. 1 ist der erfindungsgemäße Stator 1 dargestellt, welcher mehrere Statorzahngruppen 11 umfasst. Bei dieser besonders bevorzugten ersten Ausführungsform des Stators 1 ist vorgesehen, dass in jeder der möglichen Statorzahngruppen 11 im Zwischenraum 4 wenigstens ein Anpresselement 3 angeordnet ist, womit vorgesehen ist, dass - wie in Fig. 1 abgebildet - in sämtlichen Zwischenräumen 4 im Stator 1 wenigstens ein Anpresselement 3 angeordnet ist.

Der erfindungsgemäße Stator 1 kann in vorteilhafterweise eine hohe Dauerstandsfestigkeit aufweisen und kann insbesondere besonders langlebig ausgebildet sein. Vorteilhaft dabei ist, dass der Wärmeübergang über die gesamte - insbesondere hohe - Lebensdauer des Stators 1 zwischen den Polzähnen 51, 52 und der jeweiligen Wicklung 61, 62 im Wesentlichen konstant hoch ausgebildet ist, wobei der Wärmekontaktwiderstand zwischen erster Wicklung 61 und erstem Polzahn 51 und zweiter Wicklung 62 und zweitem Polzahn 52 konstant gering ist. Vorteilhaft dabei ist, dass derart über die gesamte Lebensdauer ein hoher Wärmefluss von den - im Betrieb - erwärmten Wicklungen 61, 62 auf die Polzähne 51, 52 gewährleistet werden kann.

In Weiterbildung des Stators 1 kann vorgesehen sein, dass die vom Stator 1 umfassten Statorzähne 21, 22 miteinander einstückig verbunden sind, wobei sämtliche Polzähne 51, 52 zueinander einstückig sind und dieses Polzahngebilde als Polzahnkranz bezeichnet werden kann. Hiebei ist vorgesehen, dass die Polzähne 51, 52 unlösbar miteinander verbunden sind. Der derart ausgebildete Stator 1 kann als segmentfreier Stator 1 bezeichnet werden.

Der Stator 1 kann entweder für einen Außenläufer oder für einen Innenläufer ausgebildet sein. Beim Außenläufer umschließt ein Rotor den Stator. Beim Innenläufer ist der Rotor im Zentrum des Stators angeordnet.

Die Polzähne 51, 52 können direkt bewickelt werden oder die erste Wicklung 61 und/oder die zweite Wicklung 62 kann vorgewickelt und als in deren Gesamtheit auf die Polzähne 51, 52 aufgesteckt werden. Vorteilhaft dabei ist, dass die vorgewickelte Wicklung 61 und/oder die vorgewickelten Wicklungen 61, 62 mit einem Spiel, also mit Spielpassung, auf den Polzahn 51 bzw. die Polzähne 51, 52 aufgesetzt werden können und durch das Anpresselement 3 nachträglich die Wicklungen 61, 62 an die Polzähne 51, 52 unter Minimierung des Spiels und Toleranzen zwischen den Wicklungen 61, 62 und den Polzähnen 51, 52 angepresst werden können. Vorteilhaft dabei ist, dass der Stator 1 besonders kostengünstig und besonders einfach hergestellt werden kann. Vorteilhaft dabei ist, dass das Anpresselement 3 auch hiebei in besonders vorteilhafter Weise dauerhaft den guten Wärmeübergang zwischen dem Spulendraht der Wicklung 61, 62 und den Pohlzähnen 51, 52 gewährleisten kann.

Die erste Wicklung 61 und/oder die zweite Wicklung 62 kann als sogenannte konische Wicklung ausgebildet sein, wobei die Anzahl der Wickellagen innerhalb jeder der Wicklungen 61, 62 variiert. Ich Schnitt durch die Wicklung 61, 62 normal zur Statorzentralachse 8 gesehen, wie dies in Fig. 1 bis 5 dargestellt ist, sehen die Wicklungen 61, 62 dabei keilförmig aus und weisen am der Statorzentralachse 8 abliegenden Wicklungsende mehr Wickellagen als am der Statorzentralachse 8 zugewandten Wicklungsende auf. Die Wickellagen der Wicklungen 61, 62 sind in den Fig. 1 bis 5 schematisch dargestellt.

Bei einer anderen Ausführungsform der Wicklungen 61, 62 können diese eine nichtvariierende Anzahl von Wickellagen aufweisen, wobei die Wicklungen 61, 62 am der Statorzentralachse 8 abliegenden Wicklungsende die gleiche Anzahl an Wickellagen als am der Statorzentralachse 8 zugewandten Wicklungsende aufweisen. Dabei sind die Wicklungen 61, 62 unter anderem zylindrisch oder rechtecksförmig ausbildbar.

In vorteilhafter Weiterbildung kann vorgesehen sein, dass eine erste Längsfläche 63 der ersten Wicklung 61 und eine zweite Längsfläche 64 der zweiten Wicklung 62 zueinander benachbart, zueinander gerichtet und zueinander im Wesentlichen parallel angeordnet sind, und dass der Zwischenraum 4 zwischen der ersten Längsfläche 63 und der zweiten Längsfläche 64 ausgebildet ist, wie dies ebenso in der besonders bevorzugten ersten Ausführungsform vorgesehen ist. Die Längsflächen 63, 64 sind dabei insbesondere parallel zu einer Statorzentralachse 8 angeordnet, wobei die Statorzentralachse 8 jene zentrale Achse ist, um welche die einzelnen Statorzähne 21, 22 des Stators im Wesentlichen kreisförmig angeordnet sind. Der Stator 1 kann - in Frontsicht gesehen - derart ovalförmig, insbesondere kreisförmig, bevorzugt ringförmig, ausgebildet sein, wie dies in Fig. 1 und 2 dargestellt ist.

In Fig. 2 ist - zum Vergleich mit dem erfindungsgemäßen Stator 1 - ein vergleichbarer herkömmlicher Stator 1 ohne die Anpresselemente 3 dargestellt. Nachteilig beim herkömmlichen Stator 1 ist, dass wenn dieser über dessen Betriebsbelastbarkeit belastet wurde, dass die Wärmeableitung vom Spulendraht in den Stator 1 dauerhaft verschlechtert ist, wie sich dies anhand des folgenden Beispieles zeigt: Wenn der herkömmliche Stator 1 beispielsweise für eine Verlustleistung von 30Watt pro Spule ausgelegt ist, dann erhitzen sich die Wicklungen beispielsweise auf maximal 150°C. Wenn nunmehr durch Überlast plötzlich 60Watt pro Spule Verlustleistung auftreten, dann erhitzen sich die Wicklungen auf beispielsweise auf 190°C, möglicherweise sogar sprunghaft. Dabei dehnt sich zuerst der die Wicklung aus und kann sich vom umwickelten Polzahn ablösen. Da bei 190°C auch eine gegebenenfalls vorhandene Vergussmasse erweichen kann, kann dieses Ablöseereignis auch bei einem vergossenen herkömmlichen Stator 1 eintreten. Einmal vom Polzahn abgelöst hat sich - nachteilig - gezeigt, dass auch bei Zurücknahme der Verlustleistung auf Werte innerhalb des normalen Betriebsbereichs des Stators 1 die maximal mögliche Wärmeableitung aus dem Spulendraht um 10% bis 50% schlechter als vor dem einmaligen Ablösen ist.

In vorteilhafter Weise hat sich gezeigt, dass das Anpresselement 3 üblicherweise dieses Ablösen der Wicklung vom umwickelten Polzahn verhindern kann. Vorteilhaft ist weiters, dass selbst wenn die Wicklung vom umwickelten Polzahn kurzzeitig - beispielsweise wegen spontaner Überhitzung durch Überbelastung - ablöst, das Anpresselement 3 spätestens nach Wegfall des Überhitzungsereignisses die Wicklung auf den jeweilig von dieser Wicklung umwickelten Polzahn zurückpresst. Vorteilhaft dabei ist, dass spätestens nach Zurücknahme der Verlustleistung auf Werte innerhalb des normalen Betriebsbereichs des Stators 1 die maximale Wärmeableitung aus dem Spulendraht gleich gut ist, wie vor Auftreten des - insbesondere kurzzeitigen - Ablöseereignisses des Ablösens der Wicklung vom jeweilig umwickelten Polzahn 51, 52.

In vorteilhafterweise kann dabei weiters vorgesehen sein, dass das die Wirkung des Anpresselements 3 mit lediglich geringer Zeitverzögerung einsetzt, wobei zuerst die überhitzte Wicklung 61, 62 aufheizt, infolge dessen die überhitzte Wicklung 61, 62 sich vom jeweiligen Polzahn 51, 52 möglicherweise kurzzeitig ablöst, infolge dessen das Anpresselement 3 mittels der heißen Wicklung 61, 62 erhitzt wird und sich ausdehnt, infolge dessen die anpressende Wirkung des Anpresselements 3 erhöht wird und infolge dessen die heiße Wicklung 61, 62 auf den jeweiligen Polzahn 51, 52 wiederum angepresst wird, also zurück in die Ausgangslage gepresst wird. Vorteilhaft dabei ist, dass bei auch überhitzten Wicklungen 61, 62 eine hohe Wärmeableitung aus dem Spulendraht gewährleistet werden kann, womit der Stator 1 einer möglichen Überbelastung länger standhalten kann. Insgesamt kann derart auch die Lebensdauer des Stators 1 erhöht werden.

Besonders vorteilhaft dabei ist, dass das wenigstens eine Anpresselement 3, insbesondere die Anpresselemente 3, in einem herkömmlichen bereits verwendeten Stator 1 nachträglich eingebaut werden kann. Beispielsweise kann ein Stator im Rahmen eines Services einer Elektromaschine ausgebaut werden und zur Verbesserung des Wärmeabtransportes von im Betrieb der Elektromaschine im Spulendraht entstehender Wärme könnend die Anpresselemente 3 in die Zwischenräume im herkömmlichen Stator 1 eingesetzt werden, womit der herkömmliche Stator 1 in Richtung des erfindungsgemäßen Stators 1 weitergebildet wird.

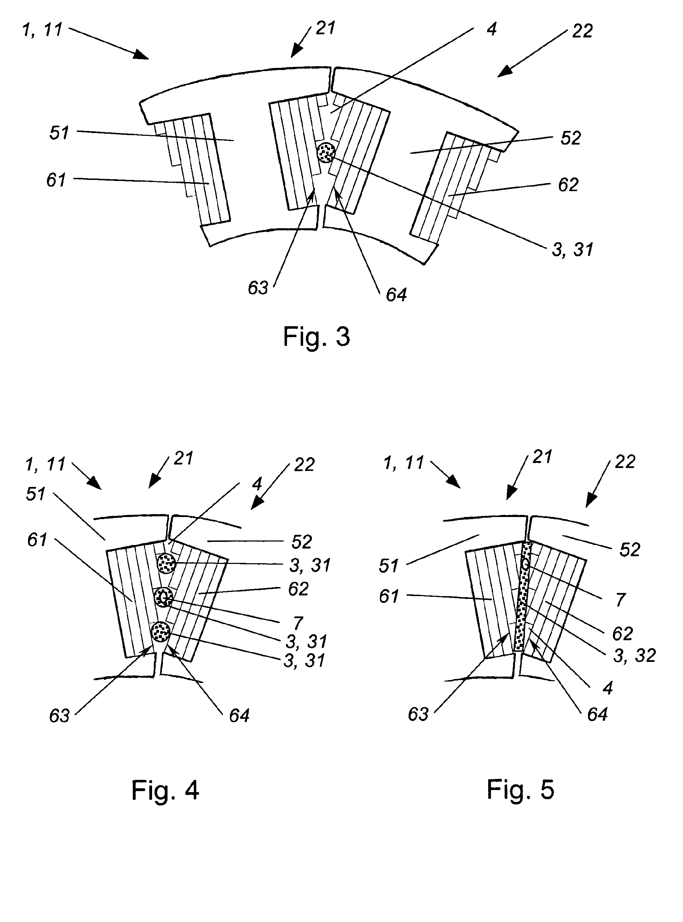

In Fig. 3 ist schematisch in Frontsicht, also in Blickrichtung der Statorzentralachse 8, im Detail die Statorzahngruppe 11 umfassend den ersten Statorzahn 21 und den zweiten Statorzahn 22 dargestellt, wobei der Stator 1 gemäß der in Fig. 1 dargestellten besonders bevorzugten ersten Ausführungsform ausgebildet ist. Bei dieser besonders bevorzugten ersten Ausführungsform ist vorgesehen, dass das Anpresselement 3 lediglich bereichsweise im Zwischenraum 4 angeordnet ist. Insbesondere ist dabei vorgesehen das Anpresselement 3 linienförmig angeordnet ist. Die Ausrichtung der linienförmigen Anordnung kann dabei insbesondere im Wesentlichen parallel zur Statorzentralachse 8 gewählt sein. Vorteilhaft dabei ist, dass das Anpresselement 3 dabei einfach, beispielsweise mittels einer Lanze in den Zwischenraum 4 eingebracht werden kann, wobei die Lanze im Zwischenraum 4 in Richtung der Statorzentralachse 8 bewegbar ist. Vorteilhaft dabei ist, dass das Abheben der Wicklungen 61, 62 von den Polzähnen 51, 52 über die gesamte Längserstreckung der Wicklungen 61, 62 zuverlässig verhindert sein kann. Die Längserstreckung der Wicklungen 61, 62 ist in diesem Sinne in Richtung Statorzentralachse 8 ausgebildet. In diesem Sinne kann das Anpresselement 3 als Anpresslinie 31 bezeichnet werden, wobei gemäß der ersten Ausführungsform eine Anpresslinie 31 pro Zwischenraum 4 vorgesehen ist. Diese eine Anpresslinie 31 pro Zwischenraum 4 kann insbesondere im Zwischenraum 4 in jenem Bereich positioniert sein, in welchem im herkömmlichen Stator 1 mit dem größten Abheben der Wicklung weg vom Polzahn zu rechnen ist. Dementsprechend kann die Anpresslinie 31 - wie in Fig. 3 dargestellt - im Wesentlichen zentral im Zwischenraum 4 positioniert sein.

Ein jeder erster Statorzahn 21 ist im Stator 1 jeweils benachbart zu zwei zweiten Statorzähnen 22 angeordnet. Ein jeder zweiter Statorzahn 22 ist im Stator 1 jeweils benachbart zu zwei ersten Statorzähnen 21 angeordnet.

In vorteilhafter Weiterbildung kann vorgesehen sein, dass das Anpresselement 3 punktförmig angeordnet ist, wobei ein Punkt im Wesentlichen eine besonders kurze Linie dargestellt und in diesem Sinne im Wesentlichen identisch, wie das linienförmige Anpresselement 3 herstellbar ist. In diesem Sinne kann das Anpresselement 3 als Anpresspunkt bezeichnet werden. Auch hiebei kann der Anpresspunkt im Zwischenraum 4 in jenem Bereich positioniert sein, in welchem im herkömmlichen Stator 1 mit dem größten Abheben der Wicklung weg vom Polzahn zu rechnen ist, wozu der Anpresspunkt insbesondere im Zentrum des Zwischenraums positioniert sein kann.

Gemäß einer vorteilhaften zweiten Ausführungsform des vorteilhaften Stators 1 - und wie schematisch in Frontsicht in Fig. 4 geschnitten dargestellt - kann vorgesehen sein, dass mehrere Anpresselemente, insbesondere mehrerer Anpresslinien 31 und/oder Anpresspunkte, pro Zwischenraum 4 angeordnet sind. Vorteilhaft dabei ist, dass auch bei vergleichsweise großen Wicklungen 61, 62 das Abheben der Wicklungen 61, 62 weg von den Polzähnen 51, 52 zuverlässig verhindert werden kann.

Insbesondere kann - wie in Fig. 1 und 3 bis 5 dargestellt - vorgesehen sein, dass die Anpresselemente 3 bei sogenannten keilförmigen Wicklungen verwendet werden, welche keilförmigen Wicklungen oftmals zur besseren Raumausnutzung der Elektromaschine im ringförmigen Stator 1 gewickelt werden. Hiebei kann insbesondere vorgesehen sein, wie ebenfalls in Fig. 1 und 3 bis 5 dargestellt, dass die Anpresselemente in jenen Bereichen des Zwischenraums 4 positioniert werden in welchen die erste Wicklung 61 und die zweite Wicklung 62 weiter zueinander beabstandet sind. Die näheren und weiteren Abstände der ersten Wicklung 61 und der zweiten Wicklung 62 zueinander entstehen dabei durch die Neigung des ersten Statorzahnes 21 zum zweiten Statorzahn 22 und durch die keilförmigen Wicklungen 61, 62, welche Stufen in den Wicklungen 61, 62 aufweisen, wobei im der Statorzentralachse 8 abgewandten Wickelbereich der Wicklung mehr Wickellagen als im der Statorzentralachse 8 zugewandten Wickelbereich der Wicklung gewickelt sind. Dabei müssen die erste Wicklung 61 und die zweite Wicklung 62 nicht zwangsläufig identisch gewickelt sein, sondern können unterschiedlich zueinander als Wicklungstyp A und als Wicklungstyp B ausgebildet sein.

In diesem Zusammenhang kann vorgesehen sein, dass pro Zwischenraum 4 sowohl Anpresspunkte als auch Anpresslinien 31 vorgesehen sind.

In einer vorteilhaften dritten Ausführungsform des Stators 1, welche in Fig. 5 schematisch in Frontsicht und im Schnitt dargestellt ist, kann vorgesehen sein, dass sich das Anpresselement 3 im Zwischenraum 4 im Wesentlichen durchgehend vom der Statorzentralachse 8 abgewandten Wickelbereich der Wicklung bis zum der Statorzentralachse 8 zugewandten Wickelbereich der Wicklung erstreckt. Dabei kann das Anpresselement 3 entweder als Anpresslinie 31 ausgebildet sein oder kann als Anpressplatte 32 ausgebildet sein. Vorteilhaft, insbesondere beim als Anpressplatte 32 ausgebildeten Anpresselement 3, ist dabei, dass auch zwischen der ersten Wicklung 61 und der zweiten Wicklung 62 ein verbesserter Wärmeaustausch gegeben ist, da das Anpresselement 3 üblicherweise Wärme um einen Faktor 3 bis 30 besser leitet als Luft. Vorteilhaft dabei ist, dass wenn beispielsweise die erste Wicklung 6 lüberhitzt, dass die Hitze, also die hohe Wärmeenergie, sowohl an den ersten Polzahn 51 auch an die jeweilig benachbarten zweiten Wicklungen 62 abgegeben werden kann, womit ein gewisser zusätzlicher Ausfallschutz des Stators 1 gewährleistet werden kann.

Insbesondere kann das Anpresselement 3 bei Raumtemperatur, also 20°C, und darüber sowohl die erste Wicklung 61 und/oder den zweiten Polzahn 52 bzw. die zweite Wicklung 62 kontaktieren. Bevorzugt kann dabei vorgesehen sein, dass das Anpresselement 3 bei Raumtemperatur und lediglich an der ersten Wicklung 61 oder lediglich am zweiten Polzahn 52 bzw. an der zweiten Wicklung 62 anhaftet. Vorteilhaft dabei ist, dass das Anpresselement 3 derart an einer Seitenfläche des Zwischenraums 4 anhaftet und an der einen Seitenfläche gegenüberliegenden zweiten Seitenfläche des Zwischenraums 4 gleitend anliegen kann. Insbesondere kann vorgesehen sein, dass das Anpresselement 3 bei Betriebstemperatur des Stators 1 an der ersten Wicklung 61 dauerhaft haftet und an der zweiten Wicklung 62 dauerhaft anliegt. Dabei können sich erste Wicklung 61 und zweite Wicklung 62 geringfügig zueinander bewegen, ohne dass das Anpresselement übermäßig scherbeansprucht wird.

Insbesondere kann vorgesehen sein, dass das Anpresselement 3 bei Betriebstemperatur des Stators 1 zumindest an der ersten Wicklung 61 anliegt. Die Betriebstemperatur des Stators kann dabei zwischen -40°C und 130°C, bevorzugt zwischen -20°C und 100°C, betragen. Eine Betriebsumgebungstemperatur des Stators 1, also die Umgebungstemperatur des Stators 1 beim Betrieb, kann beispielsweise zwischen -50°C und 90°C, bevorzugt zwischen -30°C und 70°C, betragen. Dabei kann die dauerhafte genaue Lagepositionierbarkeit des Anpresselements 3 gewährleistet werden.

Sofern sowohl der erste Statorzahn 21 und der zweite Statorzahn 22 jeweils zumindest eine Wicklung aufweisen, kann vorgesehen sein, dass das Anpresselement 3 bei Betriebstemperatur des Stators 1 an der ersten Wicklung 61 und/oder an der zweiten Wicklung 62 haftet, also dass eine dauerhafte Klebeverbindung zwischen dem Anpresselement 3 und der ersten Wicklung 61 und/oder an der zweiten Wicklung 62 besteht. Dabei kann die dauerhafte genaue Lagepositionierbarkeit des Anpresselements 3 besonders zuverlässig gewährleistet werden.

In vorteilhafter Weiterbildung kann vorgesehen sein, dass das Anpresselement 3 einen Längenausdehnungskoeffizienten von zumindest 20 · 10⁻⁶ pro Kelvin aufweist, welcher Längenausdehnungskoeffizienten damit üblicherweise größer ist, als jener von Eisen, Eisenlegierungen, Kupfer und Kupferlegierungen, welche üblicherweise bei der Herstellung des Stators 1 verwendet werden. Vorteilhaft dabei ist, dass sich dabei das Anpresselement 3 mit steigender Temperatur stärker als die Statorzähne 21 und stärker als die Wicklungen 61, 62 ausdehnt, womit sich die Anpresswirkung des Anpresselementes 3 auf die Wicklungen 61, 62 mit steigender Temperatur des Stators 1 bzw. in den Wicklungen 61, 62 erhöht. Vorteilhaft dabei ist, dass der gute Wärmeübergang zwischen den Wicklungen 61, 62 und den jeweiligen Polzähnen 51, 52 über die gesamte Betriebstemperatur - sowie darüber - des Stators 1 gewährleistet werden kann.

Mittels geeignetem Längenausdehnungskoeffizienten, beispielsweise von zumindest 50 · 10⁻⁶ pro Kelvin, kann - durch das starke Anpressen der Wicklungen 61, 62 in Richtung der Polzähne 51, 52 mit steigender Temperatur des Stators 1 bzw. in den Wicklungen 61, 62 - der Wärmeübergang zwischen den Wicklungen 61, 62 und den jeweiligen Polzähnen 51, 52 mit der steigenden Temperatur sogar erhöht werden. Dies ermöglicht einen zusätzlichen Wärmeüberlastungsschutz des Stators 1.

In vorteilhafter Ausbildung der Erfindung - insbesondere in Kombination mit den vorteilhaften ersten, zweiten oder dritten Ausführungsformen - kann vorgesehen sein, dass das Anpresselement 3 ein Polymer, insbesondere ein Silikon, umfasst. Diese Werkstoffe sind einfach in den Zwischenraum einbringbar, weisen die nötige Elastizität und den nötigen Elastizitätsmodul auf, weisen ein geringes Gewicht auf und haben eine besitzen eine hohe Zeitstandsfestigkeit.

In vorteilhafter weiterer Ausbildung des Anpresselements 3 kann vorgesehen sein, dass das Anpresselement 3 als Polymer, insbesondere als Silikon, ausgebildet ist. Polymere sind besonders einfach in den Zwischenraum einbringbar und können die nötige Elastizität, den nötigen Elastizitätsmodul, ein geringes Gewicht und die hohe Zeitstandsfestigkeit aufweisen. Beispielweise kann das Anpresselement 3 aus einem elastischen Polymer ausgebildet sein, beispielsweise Gummi, Polypropylen, Polystyrol und/oder Polyurethan. Das elastische Polymer kann mittels einer Positionierspitze einer Lanze in den Zwischenraum 4 eingeschoben werden, wobei sich das elastische Polymer zum Zeitpunkt des Einschiebens bereits im betriebsbereiten Zustand befindet, insbesondere nicht mehr aushärten muss. Derartige Anpresselemente 3 können anliegend an der ersten Wicklung 61 und zweiten Wicklung 62 unter leichter Pressung in den Zwischenraum 4 eingepresst werden.

In besonders bevorzugter Ausbildung des ein Polymer umfassenden Anpresselements 3 kann vorgesehen sein, dass das Fließverhalten des Polymers beim Einbringen des Anpresselements 3 in den Zwischenraum 4 derart eingestellt ist, dass das Anpresselement 3 während des Einbringens oder unmittelbar nach dem Einbringen tropffrei im Zwischenraum 4 angeordnet ist, sodass die auf das Anpresselement 3 wirkende Schwerkraft alleine - während des Einbringens oder unmittelbar nach dem Einbringen - keine Lageveränderung des Anpresselements 3 bewirkt. Vorteilhaft dabei ist, dass das Einbringen des Anpresselements 3 einfach, automatisiert und mit hoher Lagepräzision erfolgen kann, wobei gewährleistet sein kann, dass die auf das Anpresselement 3 beim Einbringen und unmittelbar nach dem Einbringen wirkende Schwerkraft die Lage des Anpresselements 3 im Zwischenraum 4 nicht ändert. Insbesondere können pastöse Polymere, wie beispielsweise Silikone oder thixotrope Polymere dies erfüllen. Insbesondere auch in diesem Zusammenhang kann vorgesehen sein, dass die jeweilige Wicklung 61, 62 nach dem vollendeten Wickeln am jeweiligen Polzahn 51, 52 in Betriebslage anliegt, sodass das Anpresselement 3 lediglich zur Verhinderung des, insbesondere dauerhaften, nachträglichen Abhebens bzw. Lösens der jeweiligen Wicklung 61, 62 vom jeweilig umwickelten Polzahn 51, 52, insbesondere bei der Erwärmung der jeweiligen Wicklung 61, 62, vorgesehen sein kann.

Wenn das Polymer thixotrop ist, erleichtert dies das Einbringen des Anpresselementes 3 weiter, wobei weiterhin die hohe Genauigkeit der Lagepositionierbarkeit des Anpresselementes 3 gewährleisten sein kann. Ein thixotroper Werkstoff ist ein Werkstoff, welcher Thixotropie aufweist, also welcher unter Scherbeanspruchung, beispielweise einem Rühren, dünnflüssiger wird und nach Wegfall der Scherbeanspruchung wieder dickflüssiger wird. Hiebei kann vorgesehen sein, dass das Anpresselement 3 durch eine hohle Einfülllanze in den Zwischenraum 4 eingespritzt wird, womit das automatisierte Einbringen des Anpresselementes 3 in den Zwischenraum 4 besonders einfach erfolgen kann.

Wenn das Anpresselement 3 beim Einspritzen pastös ausgebildet ist, insbesondere aus Silikon, ausgebildet ist, kann ebenfalls vorgesehen sein, dass Anpresselement 3 durch eine hohle Einfülllanze in den Zwischenraum 4 eingespritzt wird.

Besonders bevorzugt kann weiters vorgesehen sein, dass das während des Einbringens des Anpresselements 3 fließfähige Polymer aushärtbar ist, sodass das Anpresselements 3 nach einer - insbesondere vorbestimmbaren - Aushärtzeit nach dem Einbringen fest ist. Silikon oder aushärtende Polymerwerkstoffe, insbesondere Harze, bevorzugt ein Polyesterharz, können hinzu vom Anpresselement 3 umfasst sein oder das Anpresselement 3 ausbilden. Vorteilhaft dabei ist, dass diese Werkstoffe nach dem Aushärten üblicherweise auch eine Klebverbindung zwischen dem Anpresselement 3 und den benachbarten Wicklungen 61, 62 ausbilden. In diesem Zusammenhang kann insbesondere weiterhin vorgesehen sein, dass das Anpresselement 3 während des Einbringens oder unmittelbar nach dem Einbringen tropffrei im Zwischenraum 4 angeordnet ist.

Insbesondere kann das Anpresselement 3 ein thixotropes, pastöses Harzsystem umfassen, insbesondere als solches ausgebildet sein. Vorteilhaft dabei ist, dass sich das Harzsystem derart einfach und gut abmischen lässt und mit geringem Kraftaufwand und genau dosierbar in den vorgesehenen Bereichen und/oder den vorgebbaren Stellen im Zwischenraum 4 einfüllbar ist. Durch die Thixotropie wird das Harzsystem nach dem zumindest stellenweisen Einfüllen in den Zwischenraum 4 innerhalb einer kurzen Zeitdauer dickflüssig pastös, insbesondere tropffrei. Das Harzsystem härtet anschließend aus, womit das Anpresselement 3 dauerhaft einsatzbereit ist. In diesem Sinne kann das Anpresselement 3 in Form einer streichfähig verarbeitbaren Spachtelmasse vorliegen.

In vorteilhafter Weiterbildung des Polymers kann vorgesehen sein, dass das Polymer zur Einstellung des Fließverhaltens des Polymers hydrophile Kieselsäure umfasst. Die hydrophile Kieselsäure ermöglicht in besonders einfacher Weise die geeignete Einstellung des Fließverhaltens des Polymers beim Einbringen des Anpresselements 3 in den Zwischenraum 4, sodass einerseits gewährleistet sein kann, dass das Anpresselement 3 während des Einbringens eine ausreichende Fleißfähigkeit aufweist um mittels der dazu hohlen Einfülllanze eingespritzt zu werden, und andererseits gewährleistet sein kann, dass das Anpresselement 3 während des Einbringens oder unmittelbar nach dem Einbringen hinreichend tropffrei ausgebildet ist, sodass sich das Anpresselement 3 während des Aushärtens des Anpresselements 3 nicht - schon alleine durch die auf das Anpresselement 3 wirkende Schwerkraft - relativ verschiebt zur ersten Wicklung 61.

In besonders vorteilhafter Weise kann vorgesehen sein, dass mittels des Anpresselements 3 ein Sensor 7, insbesondere ein Temperatursensor, lagefest im Zwischenraum 4 gehalten ist. Dies ermöglicht die kostengünstige und raumsparende Positionierbarkeit des Sensors. Vorteilhaft dabei ist, dass der Sensor in unmittelbarer Nähe zu den Wicklungen 61, 62 positionierbar ist und derart sehr genaue Messungen mit kurzer Reaktionszeit des jeweiligen Messwertes, insbesondere der Temperatur, liefern kann.

In diesem Zusammenhang kann in vorteilhafter Weiterbildung vorgesehen sein, dass der Sensor 7 beabstandet zur ersten Wicklung 61 und zur zweiten Wicklung 62 gehalten ist, womit ein unmittelbarer Kontakt zwischen Sensor 7 und ersten Wicklung 61 und/oder zweiten Wicklung 62 verhindert ist.

Zur besonders schnellen und kostengünstigen Montage des Sensors 7 im und am Stator 1 kann in vorteilhafter Weise vorgesehen sein, dass gemeinsam mit dem Anpresselement 3 oder nachdem Einbringen des Anpresselementes 3 ein Sensor 7 derart in den Zwischenraum 4 eingebracht wird. Sofern das Anpresselement 3 beispielsweise Gummi umfasst kann der Sensor 7 im Anpresselement vormontiert werden und gemeinsam mit dem Anpresselement 3 in den Zwischenraum eingebracht werden. Sofern das Anpresselement 3 einen aushärtenden Werkstoff umfasst, kann der Sensor 7 nach dem Einbringen des Anpresselementes 3 in den Zwischenraum und vor dessen vollständigem Aushärten in das Anpresselement 3 eingesetzt werden und mittels des aushärtenden Anpresselementes 3 lagefest positioniert werden.

In vorteilhafter Weise kann in Weiterbildung vorgesehen sein, dass der Isolierkörper mit dem jeweiligen Polzahn 51, 52 klebeverbunden ist.

In Weiterbildung kann weiters vorgesehen sein, dass der wenigstens eine die Wicklung ausbildende Spulendraht eine feste Beschichtung aufweist und dass zur formschlüssigen Vergrößerung der Kontaktfläche zwischen dem Spulendraht und dem Isolierkörper anschließend an das Wickeln der Wicklung 61, 62 in diesem Kontaktbereich die feste Beschichtung des Spulendrahtes und/oder des festen Isolierkörpers wenigstens in dem Kontaktbereich thermisch oder chemisch erweicht wird. Derart kann die Verbindung des Spulendrahtes mit dem Isolierkörper derart verbessert werden, dass sich bereichsweise die Mikrostruktur der festen Beschichtung des Spulendrahtes an die Mikrostruktur des festen Spulenkörpers 1 und/oder gegengleich anpasst bzw. anpassen und dass sich Spulenddraht und Isolierkörper wenigstens geringfügig aneinander annähern. Dadurch kann die Kontaktfläche zwischen dem Spulendraht und dem Isolierkörper formschlüssig und wesentlich vergrößert werden, wodurch der Wärmewiderstand zwischen dem Spulendraht und dem Isolierkörper weiter reduziert werden kann. Auch hiebei kann das Anpresselement 3 dauerhaft verhindern, dass sich der Spulendraht vom Isolierkörper abhebt. Dies ermöglicht auch hiebei den dauerhaft guten Wärmeübergang vom Spulendraht in den jeweiligen Isolierkörper und weiter in den jeweiligen Polzahn 51, 52.

In Weiterbildung kann vorgesehen sein, dass parallel zur Statorzentralachse 8 angeordnete Längsflächen der Polzähne 51, 52, welche zum Kontakt mit dem Isolierkörper und/oder mit der Wicklung vorgesehen sind, eine Oberflächenvergrößerung, insbesondere eine Rillung, aufweisen. Derart kann die Kontaktfläche zwischen den Polzähnen 51, 52 und dem jeweilig darauf angeordneten Isolierkörper oder der jeweiligen Wicklung 61, 62 vergrößert werden und der Wärmeübergang zwischen Wicklung 61, 62 und dem jeweiligen Polzahn 51, 52 weiter verbessert werden. Die Oberflächenvergrößerung, insbesondere Rillung, der Längsflächen kann insbesondere bei der ersten, zweiten bzw. dritten Ausführungsform des Stators 1 vorgesehen sein.

Insbesondere kann die Oberflächenvergrößerung, insbesondere Rillung, in Richtung der Statorzentralachse 8 ausgerichtet sein, und dabei kompatibel mit einem Aufschieben eines klammerförmigen Isolierkörpers auf den jeweiligen Polzahn 51, 52 sein. Die Oberflächenvergrößerung, insbesondere Rillung, der Längsflächen kann dabei insbesondere derart ausgebildet sein, dass der Isolierkörper eine im Wesentlichen konstante Wandstärke im Bereich der Längsflächen der Polzähne 51, 52 aufweist.

In besonders vorteilhafter Weiterbildung kann vorgesehen sein, dass an einem der Polzähne 51, 52 und/oder auf dem Isolierkörper eine Wärmeleitbeschichtung vorgesehen ist, wobei vorgesehen ist, dass die Wärmeleitbeschichtung zwischen dem jeweiligen Polzahn 51, 52 und dem gegebenenfalls darauf angeordnetem Isolierkörper und/oder zwischen dem jeweiligen Polzahn 51, 52 und der jeweiligen Wicklung 61, 62 ausgebildet ist.

Wenn am ersten Polzahn 51 ein Isolierkörper angeordnet ist, kann die Wärmeleitbeschichtung am Isolierkörper an der dem ersten Polzahn 51 zugewandten Fläche und/oder an der dem ersten Polzahn 51 abgewandten Fläche vorgesehen sein. Vorteilhaft dabei ist, dass der Wärmeübergang zwischen dem Polzahn 51 und dem Isolierkörper und/oder zwischen dem Isolierkörper und dem die erste Wicklung 61 ausbildenden Spulendraht weiter verbessert werden kann. Gelichermaßen gilt dies auch für den zweiten Polzahn 52 und die zweite Wicklung 62.

Insbesondere kann die Wärmeleitbeschichtung pastös, beispielsweise als Wärmeleitpaste, ausgebildet sein. Vorteilhaft dabei ist, dass die Wärmeleitbeschichtung Oberflächenunebenheiten ausgleichen kann.

Insbesondere kann die Wärmeleitbeschichtung haftvermittelnd, beispielsweise als Wärmeleitkleber, ausgebildet sein. Vorteilhaft dabei ist, dass derart der weiter verbesserte Wärmeübergang dauerhaft gewährleistet werden kann. Insbesondere kann der Wärmeleitkleber auch als Wärmeleitklebefolie ausgebildet sein.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Stator (1) für eine Elektromaschine, insbesondere einen Elektromotor, wobei der Stator (1) wenigstens eine Statorzahngruppe (11) umfasst, welche Statorzahngruppe (11) einen ersten Statorzahn (21) und einen zum ersten Statorzahn (21) benachbarten zweiten Statorzahn (22) umfasst, wobei der erste Statorzahn (21) eine erste Wicklung (61) und einen ersten Polzahn (51) umfasst, wobei der zweite Statorzahn (22) einen zweiten Polzahn (52) umfasst, und wobei ein Zwischenraum (4) zwischen der ersten Wicklung (61) und dem zweiten Statorzahn (22) ausgebildet ist, **dadurch gekennzeichnet, dass** im Zwischenraum (4) ein Anpresselement (3) zum Anpressen der ersten Wicklung (61) in Richtung des ersten Polzahns (51) angeordnet ist.

2. Stator nach Anspruch 1, **dadurch gekennzeichnet, dass** der zweite Statorzahn (22) weiters eine zweite Wicklung (62) umfasst, und dass das Anpresselement (3) im Zwischenraum (4) zum Anpressen und der zweiten Wicklung (62) in Richtung des zweiten Polzahns (52) angeordnet ist.

3. Stator nach Anspruch 2, **dadurch gekennzeichnet, dass** eine erste Längsfläche (63) der ersten Wicklung (61) und eine zweite Längsfläche (64) der zweiten Wicklung (62) zueinander benachbart, zueinander gerichtet und zueinander im Wesentlichen parallel angeordnet sind, und dass der Zwischenraum (4) zwischen der ersten Längsfläche (63) und der zweiten Längsfläche (64) ausgebildet ist.

4. Stator nach einem der Ansprüche 1 bis 3, **dadurch gekennzeichnet, dass** das Anpresselement (3) lediglich bereichsweise im Zwischenraum (4) angeordnet ist.

5. Stator nach Anspruch 4, **dadurch gekennzeichnet, dass** das Anpresselement (3) punktförmig und/oder linienförmig angeordnet ist.

6. Stator nach einem der Ansprüche 1 bis 5, **dadurch gekennzeichnet, dass** das Anpresselement (3) einen Längenausdehnungskoeffizienten von zumindest 20 · 10⁻⁶ pro Kelvin aufweist.

7. Stator nach einem der Ansprüche 1 bis 6, **dadurch gekennzeichnet, dass** das Anpresselement (3) ein Polymer umfasst, und dass das Fließverhalten des Polymers beim Einbringen des Anpresselements (3) in den Zwischenraum (4) derart eingestellt ist, dass das Anpresselement (3) während des Einbringens oder unmittelbar nach dem Einbringen tropffrei und lagefest im Zwischenraum (4) angeordnet ist.

8. Stator nach Anspruch 7, **dadurch gekennzeichnet, dass** das Polymer zur Einstellung des Fließverhaltens des Polymers hydrophile Kieselsäure umfasst.

9. Stator nach einem der Ansprüche 1 bis 8, **dadurch gekennzeichnet, dass** das Anpresselement (3) thixotrop ist, insbesondere ein pastöses, thixotropes Harzsystem umfasst.

10. Stator nach einem der Ansprüche 1 bis 9, **dadurch gekennzeichnet, dass** mittels des Anpresselements (3) ein Sensor (7), insbesondere ein Temperatursensor, lagefest im Zwischenraum (4) gehalten ist.

11. Stator nach Anspruch 10, **dadurch gekennzeichnet, dass** der Sensor (7) beabstandet zur ersten Wicklung (61) gehalten ist.

12. Elektromaschine, insbesondere Elektromotor, umfassend wenigstens einen Stator (1) nach einem der Ansprüche 1 bis 11.

13. Verfahren zur Herstellung eines Stators (1) für eine Elektromaschine, insbesondere einen Elektromotor, wobei auf einem ersten Polzahn (51) eine erste Wicklung (61) gewickelt wird und derart die erste Wicklung (61) und der erste Polzahn (51) einen ersten Statorzahn (21) ausbilden, wobei ein zweiter Polzahn (52) einen zweiten Statorzahn (22) ausbildet, wobei der erste Statorzahn (21) und der zweite Statorzahn (22) benachbart zueinander angeordnet werden und derart eine Statorzahngruppe (11) des Stators (1) ausbilden, wobei bei der benachbarten Anordnung ein Zwischenraum (4) zwischen der ersten Wicklung (61) und dem zweiten Statorzahn (22) ausgebildet wird, **dadurch gekennzeichnet, dass** anschließend an die benachbarte Anordnung des ersten Statorzahns (21) zum zweiten Statorzahn (22) ein Anpresselement (3) in den Zwischenraum (4) derart eingebracht wird, dass das Anpresselement (3) bei Betriebstemperatur des Stators (1) an der ersten Wicklung (61) anliegt.

14. Verfahren nach Anspruch 13, **dadurch gekennzeichnet, dass** das Anpresselement (3) mittels einer Lanze, insbesondere mittels einer Einfülllanze, in den Zwischenraum (4) eingebracht wird.

15. Verfahren nach Anspruch 13 oder 14, **dadurch gekennzeichnet, dass** gemeinsam mit dem Anpresselement (3) oder nachdem Einbringen des Anpresselementes (3) ein Sensor (7) derart in den Zwischenraum (4) eingebracht wird, dass der Sensor (7) mittels des Anpresselements (3) lagefest im Zwischenraum (4) gehalten wird.
